## Europäisches Patentamt
## European Patent Office
## Office européen des brevets

(19)

(11) Veröffentlichungsnummer: **0 099 423**
**B1**

(12) # EUROPÄISCHE PATENTSCHRIFT

(45) Veröffentlichungstag der Patentschrift:
**14.01.87**

(21) Anmeldenummer: **82109980.1**

(22) Anmeldetag: **28.10.82**

(51) Int. Cl.⁴: **F 24 J 2/02, F 24 J 2/32,
F 24 J 2/34, F 24 C 9/00**

(54) **Heiz- und/oder Kochvorrichtung mit einem Solarkollektor.**

(30) Priorität: **17.07.82 DE 3226782**

(43) Veröffentlichungstag der Anmeldung:
**01.02.84 Patentblatt 84/5**

(45) Bekanntmachung des Hinweises auf die Patenterteilung:
**14.01.87 Patentblatt 87/3**

(84) Benannte Vertragsstaaten:
**AT BE CH DE FR GB IT LI LU NL SE**

(56) Entgegenhaltungen:
**DE-A-2 402 999
DE-A-3 033 123
DE-A-3 044 192**

**Patent Abstracts of Japan Band 4, Nr. 60, 6. Mai 1980
Seite 64M10 & JP-A-55-25786**

(73) Patentinhaber: **Stoy, Bernd, Dr.- Ing., Am
Scharfenstein 6, D-4030 Ratingen 8 (DE)**
Patentinhaber: **Pöhlmann, Erich, Kadalöhbeinsweg
1, D-8650 Kulmbach (DE)**

(72) Erfinder: **Stoy, Bernd, Dr.- Ing., Am Scharfenstein
6, D-4030 Ratingen 8 (DE)**
Erfinder: **Pöhlmann, Erich, Kadalöhbeinsweg 1,
D-8650 Kulmbach (DE)**

(74) Vertreter: **Gesthuysen, Hans Dieter, Dipl.- Ing.,
Patentanwälte Gesthuysen + von Rohr
Huyssenallee 15 Postfach 10 13 33, D-4300 Essen
1 (DE)**

LIBER, STOCKHOLM 1987

EP 0 099 423 B1

## Beschreibung

Die Erfindung betrifft eine Heiz- und/oder Kochvorrichtung mit einem Solarkollektor zur Wärmeaufnahme, einem Speicherblock zur Wärmespeicherung, mindestens einem den Solarkollektor mit dem Speicherblock verbindenden Wärmerohr und einem Heiz- und/oder Kochelement, wobei das Wärmerohr zumindest während der Wärmeaufnahme vom Solarkollektor zum Speicherblock hin ansteigend geführt ist.

Im Stand der Technik, von dem die Erfindung ausgeht (Patent Abstract of Japan, Band 4, Nr. 60, 6. Mai 1980, Seite 64M10 - JP-A-55-25.786 vom 23. Februar 1980), ist eine Heizvorrichtung der zuvor erläuterten Art bekannt, bei der dem Speicherblock eine Wärmepumpe und der Wärmepumpe wiederum ein Heizelement nachgeschaltet ist.

Im übrigen ist eine Vorrichtung zum Kochen mit Lichtenergie bekannt (DE-A-3 044 192), bei der ein Solarkollektor zur Wärmeaufnahme, ein Speicherblock zur Wärmespeicherung und Verbindungsleitungen zwischen dem Solarkollektor und dem Speicherblock zur Führung eines Wärmetransportmittels im Kreislauf vorgesehen sind. Der Solarkollektor arbeitet mit sogenannten Lichtkonzentratoren. In den Speicherblock ist ein Kochtopf integriert. Wärmerohre sind hier nicht vorgesehen. Zum Umpumpen des Wärmetransportmittels wird eine eventuell durch Solarzellen mit elektrischem Strom zu versorgende Elektropumpe vorgeschlagen.

Der Erfindung liegt nun die Aufgabe zugrunde, die bekannte, eingangs erläuterte Heizvorrichtung so auszugestalten und weiterzubilden, daß sie unter Verzicht auf eine Wärmepumpe arbeiten kann, und zwar nicht nur als Heizvorrichtung, sondern auch und insbesondere als Kochvorrichtung.

Die erfindungsgemäße Heiz- und/oder Kochvorrichtung ist dadurch gekennzeichnet, daß entweder das Heiz- und/oder Kochelement über das auch den Solarkollektor mit dem Speicherblock verbindende Wärmerohr mit dem Speicherblock verbunden ist und das Wärmerohr zum Heizen und/oder Kochen vom Speicherblock zum Heiz- und/oder Kochelement hin ansteigend geführt ist, oder das Heiz- und/oder Kochelement direkt mit dem Speicherblock verbunden ist, oder das Heiz- und/oder Kochelement über ein weiteres Wärmerohr mit dem Speicherblock verbunden ist und das weitere Wärmerohr zum Heizen und/oder Kochen vom Speicherblock zum Heiz- und/oder Kochelement hin ansteigend geführt ist. Die erfindungsgemäße Heiz- und/oder Kochvorrichtung ist insbesondere für heiße Landstriche, Wüstenregionen od. dgl. bestimmt und geeignet. Im Gegensatz zu schon länger bekannten Heiz- und/oder Kochvorrichtungen mit faltbaren Parabolspiegeln besteht bei dieser Heiz- und/oder Kochvorrichtung nicht die Notwendigkeit, unmittelbar während der Sonneneinstrahlung zu heizen bzw. zu kochen. Vielmehr ist ein Speicherblock zur Speicherung der in Wärme umgesetzten Sonnenenergie vorhanden, so daß das Heizen bzw. Kochen durchaus erst in den kühleren Abendstunden eines Tages erfolgen kann.

Bei dem zuvor angesprochenen Wärmerohr handelt es sich um ein an beiden Enden geschlossenes Rohr aus geeignetem Material, das zu einem kleinen Teil mit einem flüssigen Kältemittel gefüllt ist. Dieses Kältemittel weist einen nicht allzu hohen Siedepunkt auf. Wird das Wärmerohr mit einer bestimmten Mindestneigung, dem Anstiegswinkel, angeordnet, so kann von seinem unteren Ende zu seinem höher liegenden Ende Wärme transportiert werden. Dies geschieht dadurch, daß das Kältemittel am unteren, warmen Ende des Wärmerohres zu verdampfen beginnt und der entstehende Dampf aufsteigt und am oberen, kühleren Ende des Wärmerohres unter Wärmeabgabe kondensiert. Das Kondensat läuft wieder an das untere Ende des Wärmerohres zurück, so daß ein Wärmetransportkreislauf entsteht. Ein Wärmetransport in umgekehrter Richtung, also vom oberen zum unteren Ende des Wärmerohres ist natürlich nicht möglich. Im übrigen hat es sich gezeigt, daß Anstiegswinkel von mindestens 6° bis 7° für ein adäquates Rücklaufen des Kondensats notwendig sind.

Bei der Ausführungsform der erfindungsgemäßen Heiz- und/oder Kochelement über das auch den Solarkollektor mit dem Speicherblock verbindende Wärmerohr mit dem Speicherblock verbunden ist, läßt sich die Wärmetransportrichtung durch einfaches Wenden des Wärmerohres umdrehen. Zum Wechsel der Wärmeaufnahme und -speicherung zum Heizen bzw. Kochen kann einfach die Einheit aus Solarkollektor, Speicherblock, Wärmerohr und Heiz- und/oder Kochelement gewendet werden, so daß das Wärmerohr zum Heizen bzw. Kochen vom Speicherblock zum Heiz und/ oder Kochelement hin ansteigend geführt ist. Die im Laufe des Tages gespeicherte Wärme kann dann über das Wärmerohr zum Heiz- und/oder Kochelement transportiert und dort zum Heizen oder Kochen ausgenutzt werden.

Die erfindungsgemäße Heiz- und/oder Kochvorrichtung, bei der das Heizund/oder Kochelement über das auch den Solarkollektor mit dem Speicherblock verbindende Wärmerohr mit dem Speicherblock verbunden ist, stellt gegenüber den bekannten Heiz- und/oder Kochvorrichtungen mit faltbaren Parabolspiegeln schon eine ganz erhebliche Verbesserung dar, da nun wirklich dann geheizt bzw. gekocht werden kann, wenn dies vom Tagesablauf her gewünscht ist. Bei nicht allzu großen Dimensionen des Speicherblocks können durchaus 4 bis 5 kWh in Form von Wärme gespeichert werden. Berücksichtigt man, daß eine vierköpfige Familie für die Zubereitung einer Mahlzeit etwa 1 kWh benötigt, so ist mit der erfindungsgemäßen Heiz- und/oder Kochvorrichtung auch eine der in heißen Landstrichen üblichen Großfamilien ohne weiteres zu versorgen.

Bei der erfindungsgemäßen Heiz- und/oder Kochvorrichtung, bei der das Heiz- und/oder Kochelement über das auch den Solarkollektor mit dem Speicherblock verbindende Wärmerohr mit dem Speicherblock verbunden ist, bei der also der Solarkollektor und das Heiz- und/oder Kochelement als eine Einheit ausgeführt sind, wird beim Heizen bzw. Kochen die Wärme von Speicherblock über das Wärmerohr einerseits, wie erwünscht, dem Heiz- und/oder Kochelement, andererseits aber auch, unerwünscht, dem Solarkollektor zugeführt. Also geht beim Heizen bzw. Kochen über den Solarkollektor Wärme verloren. Eine bezüglich dieses Nachteils verbesserte Ausführungsform ist dadurch gekennzeichnet, daß ein Wärmedämmelement vorgesehen ist, während des Heizens und/oder Kochens der Solarkollektor mit dem Wärmedämmelement abdeckbar ist und vorzugsweise während der Wärmeaufnahme und -speicherung das Heiz- und/oder Kochelement mit dem Wärmedämmelement abdeckbar ist. Hier ist erkannt worden, daß nicht verhindert werden kann, daß während des Heizens bzw. Kochens Wärme vom Speicherblock zum Solarkollektor transportiert wird, daß jedoch die Wärmeabgabe von dem Solarkollektor an die Umgebung - weitgehend - verhindert werden kann, nämlich durch das zusätzlich vorgesehene Wärmedämmelement. Dabei wird ausgenutzt, daß bei der in Rede stehenden Heiz- und/oder Kochvorrichtung zum Heizen bzw. Kochen das Heiz- und/oder Kochelement und damit auch der Solarkollektor gegenüber dem Speicherblock angehoben werden müssen, um den erforderlichen Anstiegswinkel des Wärmerohres zu realisieren. Geht man davon aus, daß der Speicherblock wegen seines Gewichtes stets am Erdboden verbleibt, so werden der Solarkollektor und das Heiz- und/oder Kochelement, gegenüber der Wärmeaufnahme und -speicherung um 180° gewendet, vom Erdboden angehoben. Dann kann das Wärmedämmelement ohne weiteres unter den Solarkollektor geschoben werden. Bei entsprechend geschickter Konstruktion läßt sich eine Benutzung des Wärmedämmelementes in beiden Funktionsstellungen - Wärmeaufnahme und -speicherung einerseits, Heizen bzw. Kochen andererseits - realisieren, so daß während der Wärmeaufnahme und -speicherung das Heiz- und/oder Kochelement wärmedämmend abgedeckt ist.

Bei der Ausführungsform der erfindungsgemäßen Heiz- und/oder Kochvorrichtung, bei der das Heiz- und/oder Kochelement direkt mit dem Speicherblock verbunden ist, kann der Speicherblock eine zum Heizen und/oder Kochen abnehmbare Deck- und Dämmplatte aufweisen, vorzugsweise an seiner Oberseite. Hier ist erfindungsgemäß erkannt worden, daß man auch auf ein vom Speicherblock getrenntes Heiz- und/oder Kochelement verzichten kann, - wenn man das Heiz- und/oder Kochelement als funktional-integralen Bestandteil des Speicherblocks ausführt. Bei dieser Heiz- und/oder Kochvorrichtung wird also die zum Heizen bzw. Kochen benötigte Wärme unmittelbar aus dem Speicherblock entnommen, indem nämlich der Speicherblock einfach durch Abnehmen der Deck- und Dämmplatte geöffnet wird, vorzugsweise an seiner Oberseite.

Die zuvor erläuterte Konstruktion hat den besonderen Vorteil, daß die Heiz- und/oder Kochvorrichtung handhabungstechnisch wirklich optimal ist, da ein Wenden der Einheit aus Solarkollektor, Speicherblock, Wärmerohr und Heiz- und/oder Kochelement nicht notwendig ist. Auch hinsichtlich der Wärmeverluste ist diese Konstruktion optimal, da unmittelbar am Speicherblock die Wärme entnommen wird.

Bei der zuvor erläuterten Heiz- und/oder Kochvorrichtung, bei der das Heiz- und/oder Kochelement also vorzugsweise unterhalb der abnehmbaren Deck- und Dämmplatte angeordnet ist, kann nach dem Abnehmen der Deck- und Dämmplatte ein Kochtopf, eine Pfanne od. dgl. auf das die obere Begrenzung des Speicherernes darstellende Heiz- und/oder Kochelement gestellt werden. Das ist aber deshalb noch nicht optimal, weil die Temperatur im Inneren des Speicherblockes, also die Temperatur des Speicherkernes, nicht besonders hoch ist. Selbst wenn man berücksichtigt, daß sich der Speicherkern im Laufe eines Tages auf die sogenannte Leerlauftemperatur des Solarkollektors aufheizen kann, liegt diese Temperatur doch nicht wesentlich über 500 K. Das ist eine Temperatur, die weit unterhalb der bei sonstigen mit Gas oder elektrischer Energie betriebenen Kochvorrichtung auftritt. Die bei Verwendung eines Kochtopfes, einer Pfanne od. dgl. auftretende Temperaturdifferenz zwischen dem Heiz- und/oder Kochelement und dem Kochtopf, der Pfanne od. dgl. ist nachteilig. Folglich geht eine weitere Lehre der Erfindung dahin, das Heiz- und/oder Kochelement direkt als Kochmulde od. dgl. auszubilden, also als integralen Bestandteil des Heiz- und/oder Kochelementes einen Kochtopf, eine Pfanne od. dgl. vorzusehen. Sind mehrere muldenförmige Vertiefungen in dem Heiz- und/oder Kochelement vorhanden, so läßt sich unterschiedliches Kochgut garen.

Bei der zuvor erläuterten Heiz- und/oder Kochvorrichtung kann ein gewisses Problem darin bestehen, daß wegen der Deck- und Dämmplatte des Speicherblockes am Speicherblock selbst keine optimale Wärmedämmung und damit keine optimale Wärmespeicherung zu gewährleisten ist. Außerdem ist es mit dieser Heiz- und/oder Kochvorrichtung nicht möglich, die Heiz- bzw. Kochtemperatur zu verändern, wie das bei einem separaten Heiz- und/oder Kochelement durch unterschiedliche Neigung des Wärmerohres realisiert werden kann.

Bei der Ausführungsform der erfindungsgemäßen Heiz- und/oder Kochvorrichtung, bei der das Heiz- und/oder Kochelement über ein weiteres Wärmerohr mit dem Speicherblock verbunden ist, ist also ein sowohl vom Solarkollektor als auch vom Speicherblock getrenntes Heiz- und/oder Kochelement verwirklicht, das über ein eigenes Wärmerohr mit dem Speicherblock verbunden ist. Die notwendige Änderung des Anstiegswinkels dieses Wärmerohres zum Übergang von der Wärmeaufnahme und -speicherung zum Heizen bzw. Kochen kann durch eine Schwenklagerung des Wärmerohres am Speicherblock verwirklicht werden. Dies ist insbesondere dann möglich, wenn es sich bei dem Speichermedium im Speicherblock um eine Flüssigkeit oder ein Salz mit niedrigem Schmelzpunkt handelt. Unterschiedliche Anstiegswinkel des Wärmerohres können dann zu unterschiedlichen Heiz- bzw. Kochtemperaturen an dem Heiz- und/oder Kochelement führen.

Die zuvor erläuterte Schwenklagerung des Wärmerohres des Heiz- und/oder Kochelementes am Speicherblock ist technisch nicht unproblematisch. Als einfachere Alternative empfiehlt sich daher eine Konstruktion der erfindungsgemäßen Heiz- und/oder Kochvorrichtung, die dadurch gekennzeichnet ist, daß der Speicherblock mehrere Öffnungen für unterschiedliche Anstiegswinkel des das Heiz- und/oder Kochelement mit dem Speicherblock verbindenden Wärmerohres aufweist und das Wärmerohr wahlweise in eine der Öffnungen einsteckbar ist.

Zuvor ist nur davon die Rede gewesen, daß ein einziges Heiz- und/oder Kochelement vorgesehen ist und das Wärmerohr dieses Heiz- und/oder Kochelementes zum Heizen bzw. Kochen ggf. in unterschiedlichen Anstiegswinkeln geführt werden kann. Natürlich ist es auch möglich, mehrere, über jeweils mindestens ein Wärmerohr mit dem Speicherblock verbundene Heiz- und/oder Kochelemente vorzusehen und deren Wärmerohre in unterschiedlichen Anstiegswinkeln zu führen bzw. Maßnahmen zu treffen, die eine entsprechende Führung der Wärmerohre erlauben. An den unterschiedlichen Heiz- und/oder Kochelementen können dann unterschiedliche Heiz- bzw. Kochtemperaturen realisiert werden.

Nach einer weiteren Lehre der zuletzt erläuterten Erfindung, der besondere Bedeutung zukommt, ist der Anstiegswinkel des das Heiz- und/oder Kochelement mit dem Speicherblock verbindenden Wärmerohres geringer als der Anstiegswinkel des den Solarkollektor mit dem Speicherblock verbindenden Wärmerohres und ist für einen Wechsel von Wärmeaufnahme und -speicherung zum Heizen und/ oder Kochen die Einheit aus Solarkollektor, Speicherblock, Heiz- und/oder Kochelement und Wärmerohren durch Anheben des Solarkollektors gegenüber dem Speicherblock um höchstens den Anstiegswinkel des den Solarkollektor mit dem Speicherblock verbindenen Wärmerohres kippbar. Diese Konstruktion ist besonders einfach, da an sich Solarkollektor, Speicherblock, Heiz- und/oder Kochelement und Wärmerohre in fester räumlicher Zuordnung zueinander angeordnet sein können. Ein Anheben des Solarkollektors bewirkt nun, daß auch das Heiz- und/oder Kochelement angehoben wird. Da während der Wärmeaufnahme und -speicherung der Anstiegswinkel des das Heiz- und/oder Kochelement mit dem Speicherblock verbindenden Wärmerohres geringer ist als der Anstiegswinkel des den Solarkollektor mit dem Speicherblock verbindenden Wärmerohres, verläuft spätestens dann, wenn das Wärmerohr zwischen Solarkollektor und Speicherblock die Horizontale erreicht, das Wärmerohr zwischen Speicherblock und Heiz- und/oder Kochelement zum Heiz- und/oder Kochelement hin ansteigend. Durch Anheben des Solarkollektors gegenüber dem Speicherblock nach Art einer "Schubkarre" wird also ein "Umschalten" von Wärmeaufnahme und -speicherung auf Heizen und/oder Kochen erzielt.

Die zuvor erläuterte Ausführungsform einer Heiz- und/oder Kochvorrichtung ist handhabungstechnisch äußerst einfach und bietet gleichwohl alle bedienungstechnischen Vorteile eines gesondert angeordneten Heiz- und/oder Kochelementes. Die Konstruktion kann in entsprechender Weise auch bei der Heizund/oder Kochvorrichtung ohne gesondertes Heiz- und/oder Kochelement, also mit unmittelbarer Wärmeabgabe vom Speicherblock, genutzt werden, um nämlich den Wärmetransport vom Solarkollektor zum Speicherblock zu unterbrechen.

In weiterer Ausgestaltung der zuletzt erläuterten Ausführungsform einer Heizund/oder Kochvorrichtung empfiehlt es sich, den Solarkollektor mit einem vorzugsweise ausklappbaren Standfuß entsprechender Länge zu versehen. Anstelle des ausklappbaren Standfußes kann auch ein teleskopartiger Standfuß od. dgl. verwendet werden. Über eine variable Länge des Standfußes lassen sich leicht unterschiedliche Anstiegswinkel realisieren. Auch der Speicherblock weist vorzugsweise einen Standfuß auf, wobei dieser Standfuß und ggf. auch der Standfuß des Solarkollektors vorzugsweise mit Rollen versehen ist. Man kann dann die gesamte Heiz- und/der Kochvorrichtung leicht von Ort zu Ort transportieren.

Aus den vorangegangenen Ausführungen ist deutlich geworden, daß über den Anstiegswinkel zwischen dem Solarkollektor und dem Speicherblock bzw. über den Anstiegswinkel zwischen dem Speicherblock und dem Heiz- und/oder Kochelement der Wärmetransport vom Solarkollektor zum Speicherblock bzw. vom Speicherblock zum Heiz- und/oder Kochelement beeinflußt werden kann. Dies ausnutzend geht eine weitere Lehre der Erfindung dahin, den Anstiegswinkel zwischen dem Solarkollektor und dem Speicherblock und/oder den Anstiegswinkel zwischen dem Speicherblock und dem Heiz- und/oder Kochelement temperaturabhängig zu steuern, so daß damit der Wärmetransport zwischen dem Solarkollektor und dem Speicherblock und/oder der Wärmetransport zwischen dem Speicherblock und dem Heiz- und/oder Kochelement gesteuert und/oder die Speichertemperatur und/oder die Heiz- bzw. Kochtemperatur gesteuert oder geregelt werden kann. Das kann z. B. durch Bimetall-Elemente realisiert werden.

Bislang ist noch nichts dazu gesagt worden, wie der Solarkollektor der erfindungsgemäßen Heiz- und/oder Kochvorrichtung zweckmäßigerweise ausgestaltet sein soll. Nun sind tatsächlich Solarkollektoren der in Rede stehenden Art in verschiedensten Ausführungsformen bekannt. Konstruktiv besonders einfach ist ein Wärmerohr-Flachkollektor mit einer großflächigen geschwärzten Absorptionsfläche. Mit einem solchen Wärmerohr-Flachkollektor sind spezifische Wärmeleistungen von ca. 200 W/m$^2$ erreichbar. Die Leerlauftemperatur derartiger Solarkollektoren liegt bei etwa 470 bis 500 K. Um eine möglichst große spezifische Leistung zu realisieren und die Leerlauftemperatur zu erhöhen, empfiehlt sich eine Ausbildung des Solarkollektors als Vakuum-Flachkollektor. Ein solcher Vakuum-Flachkollektor besteht aus mehreren parallelen, evakuierten Glasrohren, die auf der unteren Hälfte ihrer Innenflächen mit selektiven Absorberbeschichtungen versehen sind. Die Sonnenenergie wird zum größten Teil an der Absorberbeschichtung in Wärme umgewandelt und durch die dünne Glaswandung der Glasrohre auf unter den Glasrohren verlaufende Wärmerohre übertragen. Mit derartigen, technisch allerdings relativ aufwendigen Vakuum-Flachkollektoren sind spezifische Wärmeleistungen bis zu 400 W/m$^2$ und Leerlauftemperaturen bis zu 530 K und mehr zu erreichen.

Als Wärmespeichermedium für den Speicherblock kommen geeignete Flüssigkeiten, Salze mit geeignetem Schmelzpunkt usw. ebenso in Frage wie als Wärmespeichermedium bekannte Feststoffe.

Wenn zuvor stets alternativ von Wärmeaufnahme und -speicherung und Kochen die Rede gewesen ist, so bedeutet dies natürlich nicht, daß nicht bei geeigneter Konstruktion der Heiz- und/oder Kochvorrichtung auch beide Vorgänge gleichzeitig ablaufen können. Das stellt insbesondere bei der zuletzt erläuterten Lehre der Erfindung eine reale Möglichkeit dar. Z. B. kann das Heizund/oder Kochelement mit aufsteckbaren Rippen od. dgl. versehen werden, so daß insbesondere in kühlen Nächten - nach einem vorangegangenen Kochen die erfindungsgemäße Heiz- und/oder Kochvorrichtung noch zum Heizen genutzt werden kann.

Im folgenden wird die Erfindung nochmals kurz anhand einer lediglich Ausführungsbeispiele darstellenden Zeichnung erlautert; es zeigt

Fig. 1 schematisch und im Schnitt ein erstes Ausführungsbeispiel einer erfindungsgemäßen Heiz- und/oder Kochvorrichtung,

Fig. 2 schematisch und im Schnitt ein zweites Ausführungsbeispiel einer erfindungsgemäßen Heiz- und/oder Kochvorrichtung,

Fig. 3 schematisch und im Schnitt ein drittes Ausführungsbeispiel einer erfindungsgemäßen Heiz- und/oder Kochvorrichtung und

Fig. 4 den Gegenstand nach Fig. 3 in einer anderen Stellung.

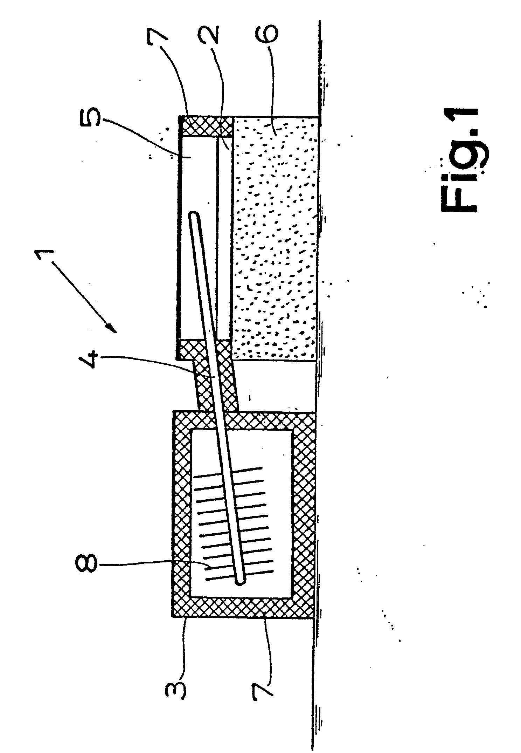

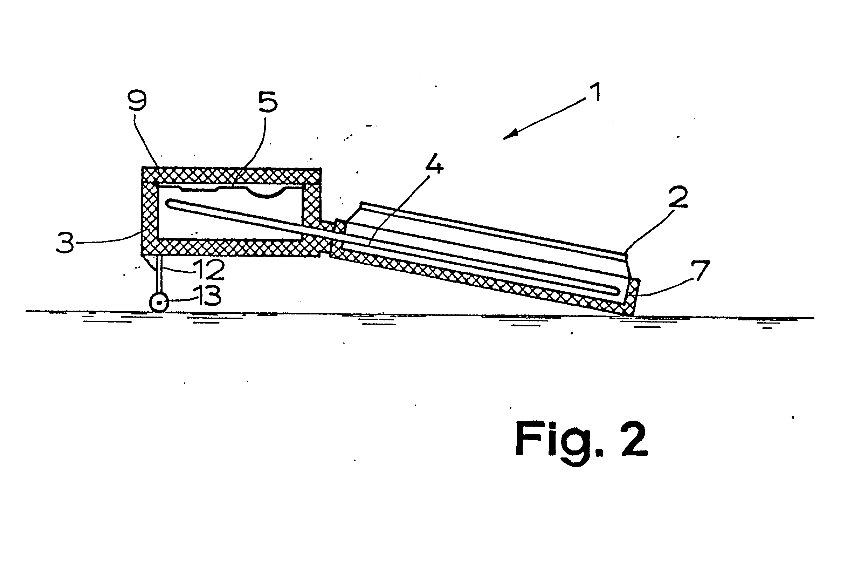

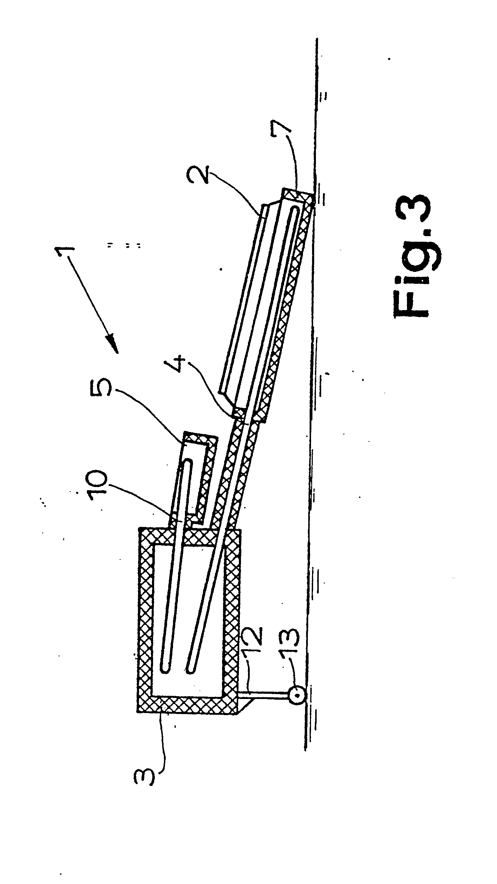

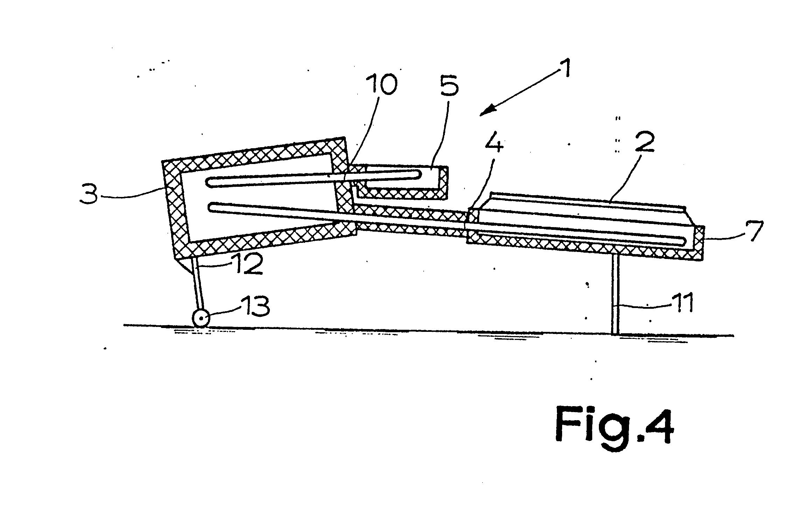

Die in den Fig. 1 und 4 gezeigten Heiz- und/oder Kochvorrichtungen 1 befinden sich in Kochstellung, während sich die in den Fig. 2 und 3 dargestellten Heiz- und/oder Kochvorrichtungen 1 in Wärmeaufnahme- und -speicherstellung befinden.

Die in Fig. 1 dargestellte Heiz- und/oder Kochvorrichtung 1 weist einen Solarkollektor 2 zur Wärmeaufnahme, einen Speicherblock 3 zur Wärmespeicherung, ein den Solarkollektor 2 mit dem Speicherblock 3 verbindendes Wärmerohr 4 und ein Heiz- und/oder Kochelement 5 auf. Der Solarkollektor 2, der Speicherblock 3 und das Wärmerohr 4 sind, wie angedeutet ist, von Wärmedämmaterial 7 umgeben. ·

In Fig. 1 ist nicht erkennbar, daß das Wärmerohr 4 während der Wärmeaufnahme und -speicherung vom Solarkollektor 2 zum Speicherblock 3 hin ansteigend geführt ist. Erkennbar ist in Fig. 1, daß zum Kochen, nämlich in der dargestellten Kochstellung, das Wärmerohr 4 vom Speicherblock 3 zum Heizund/oder Kochelement 5 hin ansteigend geführt ist.

Um eine unerwünschte Wärmeabgabe vom Solarkollektor 2 in die Umgebung während des Kochens zu verhindern, ist ein Wärmedämmelement 6 vorgesehen, durch das der Solarkollektor 2 während des Kochens abgedeckt ist. Das Wärmedämmelement ist in Fig. 1 zwischen dem Solarkollektor 2 und dem Erdboden eingeschoben.

Fig. 1 zeigt im übrigen noch, daß das Wärmerohr 4 im Speicherblock 3 zur Verbesserung des Wärmeüberganges in das nicht eingezeichnete Speichermedium mit Wärmeverteilungsrippen 8 versehen ist.

Auch die in Fig. 2 dargestellte Heiz- und/oder Kochvorrichtung 1 weist einen Solarkollektor 2 zur Wärmeaufnahme, einen Speicherblock 3 zur Wärmespeicherung, ein den Solarkollektor 2 mit dem Speicherblock 3 verbindendes Wärmerohr 4 und ein Heiz- und/oder Kochelement 5 auf. Während der Wärmeaufnahme und -speicherung ist das Wärmerohr 4 auch hier vom Solarkollektor 2 zum Speicherblock 3 hin ansteigend geführt. Die Besonderheit ist hier, daß der Speicherblock an seiner Oberseite eine zum Kochen abnehmbare Deck- und Dämmplatte 9 aufweist, unterhalb der abnehmbaren Deck- und Dämmplatte 9 das Heiz- und/oder Kochelement 5 angeordnet ist und das Heiz- und/oder Kochelement 5 als Kochmulde ausgebildet ist.

Bei der in den Fig. 3 und 4 dargestellten Heiz- und/oder Kochvorrichtung 1 ist neben dem schon mehrfach erwähnten Solarkollektor 2, dem Speicherblock 3, dem entsprechenden Wärmerohr 4 und dem Heiz- und/oder Kochelement 5 ein zusätzliches Wärmerohr 10 vorgesehen; hier ist also das Heiz- und/oder Kochelement 5 über das zusätzliche Wärmerohr 10 mit dem Speicherblock 3 verbunden. Das das Heiz- und/oder Kochelement 5 mit dem Speicherblock 3 verbindende Wärmerohr 10 ist während der Wärmeaufnahme und -speicherung zum Speicherblock 3 hin ansteigend geführt. Der Anstiegswinkel des das Heiz- und/oder Kochelement 5 mit dem Speicherblock 3 verbindenden Wärmerohres ist dabei geringer als der Anstiegswinkel des den Solarkollektor 2 mit dem Speicherblock 3 verbindenden Wärmerohres 4.

Aus einem Vergleich der Fig. 3 und 4 ergibt sich, daß für einen Wechsel von Wärmeaufnahme und -speicherung zum Heizen und/oder Kochen die Einheit aus Solarkollektor 2, Speicherblock 3, Heiz- und/oder Kochelement 5 und Wärmerohren 4, 10 durch Anheben des Solarkollektors 2 gegenüber dem Speicherblock 3 verbindenden Wärmerohres 4 kippbar ist. Zur Beibehaltung der Kochstellung gemäß Fig. 4 ist der Solarkollektor 2 mit einem ausklappbaren Standfuß 11 entsprechender Länge versehen. Auch der Speicherblock 3 ist mit einem Standfuß 12 versehen, der seinerseits mit Rollen 13 versehen ist.

Einleitend ist gesagt worden, daß das Wärmerohr zu einem kleinen Teil mit einem flüssigen Kältemittel gefüllt ist. Statt eines Kältemittels (im engeren Sinne) kann unter bestimmten Voraussetzungen auch Wasser verwendet werden.

## Patentansprüche:

1. Heiz- und/oder Kochvorrichtung (1) mit einem Solarkollektor (2) zur Wärmeaufnahme, einem Speicherblock (3) zur Wärmespeicherung, mindestens einem den Solarkollektor (2) mit dem Speicherblock (3) verbindenen Wärmerohr (4) und einem Heiz- und/oder Kochelement (5), wobei das Wärmerohr (4) zumindest während der Wärmeaufnahme vom Solarkollektor (2) zum Speicherblock (3) hin ansteigend geführt ist, dadurch gekennzeichnet, daß entweder das Heiz- und/oder Kochelement (5) über das auch den Solarkollektor (2) mit dem Speicherblock (3) verbindende Wärmerohr (4) mit dem Speicherblock (3) verbunden ist und das Wärmerohr (4) zum Heizen und/ oder Kochen vom Speicherblock (3) zum Heiz- und/oder Kochelement (5) hin ansteigend geführt ist, oder das Heiz- und/oder Kochelement (5) direkt mit dem Speicherblock (3) verbunden ist, oder das Heiz- und/oder Kochelement (5) über ein weiteres Wärmerohr (10) mit dem Speicherblock (3) verbunden ist und das weitere Wärmerohr (10) zum Heizen und/oder Kochen vom Speicherblock (3) zum Heiz- und/oder Kochelement (5) hin ansteigend geführt ist.

2. Heiz- und/oder Kochvorrichtung nach Anspruch 1, dadurch gekennzeichnet, daß ein Wärmedämmelement (6) vorgesehen ist, während des Heizens und/oder Kochens der Solarkollektor (2) mit dem Wärmedämmelement (6) abdeckbar ist und vorzugsweise während der Wärmeaufnahme und -speicherung das Heizund/oder Kochelement (5) mit dem Wärmeelement (6) abdeckbar ist.

3. Heiz- und/oder Kochvorrichtung nach Anspruch 1, dadurch gekennzeichnet, daß der Speicherblock (3) eine zum Heizen und/oder Kochen abnehmbare Deckund Dämmplatte (9) aufweist, vorzugsweise an seiner Oberseite.

4. Heiz- und/oder Kochvorrichtung nach Anspruch 3, dadurch gekennzeichnet, daß unterhalb der abnehmbaren Deck- und Dämmplatte (9) das Heiz- und/oder Kochelement (5) angeordnet und vorzugsweise als Kochmulde od. dgl. ausgebildet ist.

5. Heiz- und/oder Kochvorrichtung nach Anspruch 1, dadurch gekennzeichnet, daß der Speicherblock (3) mehrere Öffnungen für unterschiedliche Anstiegswinkel des das Heiz- und/oder Kochelement (5) mit dem Speicherblock (3) verbindenen Wärmerohres (4) aufweist und das Wärmerohr (4) wahlweise in eine der Öffnungen einsteckbar ist.

6. Heiz- und/oder Kochvorrichtung nach Anspruch 1 oder 5, dadurch gekennzeichnet, daß mehrere über jeweils mindestens ein Wärmerohr mit dem Speicherblock (3) verbundene Heiz- und/oder Kochelemente (5) vorgesehen sind und die Wärmerohre in unterschiedlichen Anstiegswinkeln führbar bzw. geführt sind.

7. Heiz- und/oder Kochvorrichtung nach Anspruch 1, 5 oder 6, dadurch gekennzeichnet, daß der Anstiegswinkel des das Heiz- und/oder Kochelement (5) mit dem Speicherblock (3) verbindenden Wärmerohres (10) geringer ist als der Anstiegswinkel des den Solarkollektor (2) mit dem Speicherblock (3) verbindenden Wärmerohres (4) und für einen Wechsel von Wärmeaufnahme und -speicherung zum Heizen und/oder Kochen die Einheit aus Solarkollektor (2), Speicherblock (3), Heiz- und/oder Kochelement (5) und Wärmerohren (4, 10) durch Anheben des Solarkollektors (2) gegenüber dem Speicherblock (3) um höchstens den Anstiegswinkel des den Solarkollektor (2) mit dem Speicherblock (3) verbindenen Wärmerohres (4) kippbar ist.

8. Heiz- und/oder Kochvorrichtung nach einem der Ansprüche 1 bis 7, dadurch gekennzeichnet, daß der Solarkollektor (2) mit einem vorzugsweise ausklappbaren Standfuß (11) entsprechender Länge versehen ist.

9. Heiz- und/oder Kochvorrichtung nach einem der Ansprüche 1 bis 8, dadurch gekennzeichnet, daß der Speicherblock (3) einen vorzugsweise mit Rollen (13) versehenen Standfuß (12) aufweist.

10. Heiz- und/oder Kochvorrichtung nach einem der Ansprüche 1 bis 9, dadurch gekennzeichnet, daß der Solarkollektor (2) als Wärmerohr-Flachkollektor oder als Vakuum-Flachkollektor ausgebildet ist.


**Claims**

1. A heating and/or cooking appliance (1) with a solar collector (2) for the absorption of heat and a storage block (3) for its storage, at least one heat tube (4) connecting the solar collector (2) to the storage block (3) and to a heating and/or cooking unit (5) in which the heat tube (4) is led upwards from the solar collector (2) to the storage block (3), at least during the absorption of heat, characterized in that either the heating and/or cooking unit (5) is connected to the storage block (3) by the heat tube (4) that also connects the solar collector (2) to the storage block (3) and for heating and/or cooking the heat tube (4) is led upwards from the storage block (3) to the heating and/or cooking unit (5), or the heating and/or cooking unit (5) is connected to the storage block (3) via a further heat tube (10) and that for heating and/or cooking the further heat tube (10) is led upwards from the storage block (3) to the heating and/or cooking unit (5).

2. A heating and/or cooking appliance according to Claim 1, characterized in that a thermal insulation unit (6) is provided, that during heating and/or cooking the solar collector (2) is coverable by the thermal insulation unit (6) and during heat absorption and storage the heating and/or cooking unit (5) is preferably covered by the thermal insulation unit (6).

3. A heating and/or cooking appliance according to Claim 1, characterized in that the storage block (3) possesses, preferably on its upper surface, a covering and insulating plate (9), removable for heating and/or cooking.

4. A heating and/or cooking appliance according to Claim 3, characterized in that the heating and/or cooking unit (5) is located below the removable covering and insulating plate (9), and is preferably constructed with cooking recesses or the like.

5. A heating and/or cooking appliance according to Claim 1, characterized in that the storage block (3) possesses several holes for different angles of slope of the heat tube (4) connecting the heating and/or cooking unit (5) to the storage block (3) and the heat tube (4) is plugged at choice into one of the holes.

6. A heating and/or cooking appliance according to Claim 1 or 5, characterized in that several heating and/or cooking units (5) are provided, each connected to the storage block (3) by at least one heat tube, and the heat tubes are arranged or are arrangable at different angles of slops.

7. A heating and/or cooking appliance according to Claim 1, 5 or 6, characterized in that the angle of the slope of the heat tube (10) connecting the heating and/or cooking unit (5) to the storage block (3) is less than the angle of slope of the heat tube (4) connecting the solar collector (2) to the storage block (3), and that to change over from heat absorption and storage to heating and/or cooking the solar collector (2), storage block (3), heating and/or cooking unit (5) and heat tubes (4, 10) is as a unit tilted as a maximum to the angle of slope of the heat tube (4) connecting the solar collector (2) to the storage block (3), by raising the solar collector (2) relatively to the storage block (3).

8. A heating and/or cooking appliance according to one of Claims 1 to 7, characterized in that the solar collector (2) is provided with a, preferably folding, supporting leg (11) of appropriate length.

9. A heating and/or cooking appliance according to one of Claims 1 to 8 characterized in that the storage block (3) possesses a supporting leg (12), preferably provided with rollers (13).

10. A heating and/or cooking appliance according to one of Claims 1 to 9, characterized in that the solar collector (2) is constructed as a heat tube surface collector or as a vacuum surface collector.


**Revendications**

1. Dispositif de chauffage et/ou de cuisson (1), avec un collecteur solaire (2) pour absorber la chaleur, un bloc d'accumulation (3) pour accumuler la chaleur, au moins un tube échangeur de chaleur (4) reliant le collecteur solaire (2) au bloc d'accumulation (3) et un élément de chauffage et/ou de cuisson (5), le tube échangeur de chaleur (4) étant disposé en position montante depuis le collecteur solaire (2) vers le bloc d'accumulation (3) au moins, pendant l'absorption de la chaleur caractérisée en ce que, soit l'élément de chauffage et/ou de cuisson (5) est relié au bloc d'accumulation (3) par le tube échangeur de chaleur (4) reliant également le collecteur solaire (2) au bloc d'accumulation (3) et que le tube échangeur de chaleur (4) est disposé en position montante, depuis le bloc d'accumulation (3) vers l'élément de chauffage et/ou de cuisson (5) pour réaliser le chauffage et/ou la cuisson, ou bien que l'élément de chauffage et/ou de cuisson (5) est relié directement au bloc d'accumulation (3) bien que l'élément de chauffage et/ou de cuisson (5) est relié au bloc d'accumulation (3) par un autre tube échangeur de chaleur (10) et que cet autre tube échangeur de chaleur (10) est disposé en position montante depuis le bloc d'accumulation (3) vers l'élément de chauffage et/ou de cuisson (5) pour assurer le chauffage et/ou la cuisson.

2. Dispositif de chauffage et/ou de cuisson

selon la revendication 1, caractérisé en ce qu'il est prévu un élément isolant thermique (6), que le collecteur solaire (2) peut être recouvrit par l'élément isolant thermique (6) pendant le chauffage et/ou la cuisson et que l'élément de chauffage et/ou de cuisson (5) peut être avantageusement recouvert par l'élément isolant thermique (6) pendant l'absorption et l'accumulation de chaleur.

3. Appareil de chauffage et/ou de cuisson, selon la revendication 1, caractérisé en ce que le bloc d'accumulation (3) présente une plaque amovible de recouvrement et d'isolation, de préférence à sa face supérieure en vue d'assurer le chauffage et/ou la cuisson.

4. Appareil de chauffage et/ou de cuisson, selon la revendication 3, caractérisé en ce que, l'élément de chauffage et/ou de cuisson (5) est disposé en dessous de la plaque amovible de recouvrement et d'isolation (9) et présente, de préférence la forme d'une cuvette de cuisson.

5. Appareil de chauffage et/ou de cuisson, selon la revendication 1, caratérisé en ce que, le bloc d'accumulation (3) présente plusieurs orifices, permettant d'obtenir différents angles de montée, pour le tube échangeur de chaleur (4) reliant l'élément de chauffage et/ou de cuisson (5) au bloc d'accumulation (3), tandis que le tube d'échangeur de chaleur (4) peut être inséré au choix, dans l'un de ces orifices.

6. Appareil de chauffage et/ou de cuisson, selon la revendication 1 ou 5, caractérisé en ce qu'il est prévu plusieurs éléments de chauffage et/ou de cuisson (5) reliés chacun par au moins, un tube échangeur de chaleur avec le bloc d'accumulation (3) et que les tubes échangeurs de chaleur peuvent être disposés suivant des angles de montées différents.

7. Appareil de chauffage et/ou de cuisson, selon la revendication 1, 5 ou 6, caractérisé en ce que, l'angle de montée du tube échangeur de chaleur (10), reliant l'élément de chauffage et/ou de cuisson (5) au bloc d'accumulation (3) est plus faible que l'angle de montée du tube échangeur de chaleur (4) reliant le collecteur solaire (2) au bloc d'accumulation (3) et que, pour passer de l'absorption et de l'accumulation de chaleur au chauffage et/ou à la cuisson, l'unité constituée du collecteur solaire (2) du bloc d'accumulation (3) de l'élément de chauffage et/ou de cuisson (5) et des tubes échangeurs de chaleur (4, 10) peut pivoter par soulèvement du collecteur solaire (2) par rapport au bloc d'accumulation (3) a raison, du plus de l'angle d'inclinaison du tube échangeur de chaleur, reliant le collecteur solaire (2) au bloc d'accumulation (3).

8. Appareil de chauffage et/ou de cuisson, selon l'une des revendications 1 à 7, caratérisé en ce que le collecteur solaire (2) est pourvu d'un pied support (11) rabattable de préférence, et d'une longueur appropriée.

9. Appareil de chauffage et/ou de cuisson, selon l'une des revendications 1 à 8, caractérisé en ce que le bloc d'accumulation (3) présente un pied de support (12) équipé de préférence de roulettes (13).

10. Appareil de chauffage et/ou de cuisson, selon les revendications 1 à 9, caractérisé en ce que le collecteur solaire (2), est constitué sous forme d'un collecteur plat, avec tubes échangeurs de chaleur ou bien sous forme de collecteur plat, sous vide.

Fig.1

Fig. 2

**Fig.3**

0 099 423

Fig.4

0 099 423